# EUROPÄISCHE PATENTSCHRIFT

(11) **EP 1 132 691 B1**
(45) Veröffentlichungstag und Bekanntmachung des Hinweises auf die Patenterteilung: **10.05.2006**
(21) Anmeldenummer: 01890069.6
(22) Anmeldetag: 08.03.2001
(51) Int. Cl.: F24H 1/18

(54) **Pufferspeicher für den Wärmeträger eines Wärmeverbrauchers, insbesondere einer Niedertemperaturheizung**
Buffer storage for the heat transfer fluid of a heat consumer, especially a low temperature heating installation
Accumulateur tampon pour un fluide de transfert de chaleur d'un utilisateur, en particulier un chauffage à basse température

(30) Priorität: 08.03.2000 AT 382002000
(43) Veröffentlichungstag der Anmeldung: 12.09.2001
(73) Patentinhaber: Buchinger, Anton Florian, 4311 Schwertberg (AT)
(72) Erfinder: Buchinger, Anton Florian, 4311 Schwertberg (AT)
(74) Vertreter: Hübscher, Helmut

(56) Entgegenhaltungen:
- EP-A- 0 066 566
- WO-A-96/10155
- FR-A- 2 368 672

## Beschreibung

Die Erfindung bezieht sich auf einen Pufferspeicher für den Wärmeträger eines Wärmeverbrauchers, insbesondere einer Niedertemperaturheizung, mit einem lastabtragenden Behälter und mit einer Wärmeisolierung zwischen dem Behältermantel und einer wasserdichten Innenauskleidung.

Übliche Pufferspeicher bestehen aus einem lastabtragenden Stahlbehälter, der an der Außenseite eine Wärmeisolierung aufweist. Da die Wärmeschichtung des Wärmeträgers im Pufferspeicher zur Ausnützung höherer Temperaturen in den oberen Speicherschichten möglichst ungestört beibehalten werden soll, sind jedoch diese Stahlbehälter ungünstig, weil über ihren wärmeleitenden Mantel ein Wärmeaustausch stattfindet. Es wurden zwar bereits Speicherbehälter aus Kunststoff vorgeschlagen, doch sind diese Kunststoffbehälter aufwendig, insbesondere für größere Speichervolumen. Bei Pufferspeichern mit größeren Speichervolumen sind außerdem die Transportschwierigkeiten zu beachten, wobei die mögliche Speichergröße häufig durch die Querschnitte der Zutrittsöffnungen zum Aufstellungsort bestimmt werden.

Um einen Wasserbehälter in einfacher Weise mit einem Isoliermantel versehen zu können, ist es bekannt (DE 26 47 142 B1), den Isoliermantel aus einer aufwikkelbaren Isoliermatte herzustellen, die einseitig mit gelenkig bewegbaren Isolierrippen versehen ist, so daß der Isoliermantel außen um den Wasserbehälter gewickelt werden kann. Hinsichtlich des Wärmeaustausches zwischen den unter schiedlich warmen Wasserschichten über die Behälterwand treten jedoch die bereits geschilderten Nachteile auf.

Darüber hinaus ist es bekannt (WO 96/10155 A1), einen Druckbehälter für Flüssigkeiten mit einem lastabtragenden, metallischen Behältermantel und einer Innenauskleidung aus Kunststoff vorzusehen, um einen Korrosionsangriff auf den Außenmantel durch die aufgenommene Flüssigkeit zu vermeiden. Zur Druckübertragung wird der Zwischenraum zwischen dem Außenmantel und der Innenauskleidung mit einer geeigneten Flüssigkeit gefüllt. Soll eine entsprechende Wärmeisolierung vorgesehen werden, so kann in den mit Flüssigkeit gefüllten Zwischenraum zwischen dem Behältermantel und der Innenauskleidung eine Wärmeisolierung eingesetzt werden. Wegen der Flüssigkeitsfüllung ist allerdings der Herstellungsaufwand erheblich.

Schließlich ist es für die Auskleidung metallurgischer Gefäße bekannt (EP 0 066 566 A1), feuerfeste Mauersteine einzusetzen, die scharenweise versetzt werden und zu ihrer gegenseitigen Verschwenkung Schultern und Gegenschultern mit ineinandergreifenden konkaven und konvexen Rundungen aufweisen, was die Versetzung entlang einer Rundung vereinfacht

Der Erfindung liegt die Aufgabe zugrunde, einen Pufferspeicher für den Wärmeträger eines Wärmeverbrauchers, insbesondere einer Niedertemperaturheizung, der eingangs geschilderten Art so auszugestalten, daß ein einfacher Aufbau sichergestellt wird.

Die Erfindung löst die gestellte Aufgabe dadurch, daß die Wärmeisolierung zumindest im Bereich des Behältermantels aus einzelnen, scharenweise versetzbaren Wärmedämmsteinen besteht, die innen mit einer wasserdichten Folie als Innenauskleidung abgedeckt sind.

Da der lastabtragende Behältermantel die Wärmeisolierung außen umschließt, und die Wärmeisolierung auf der Innenseite durch eine wasserdichte Folie abgedeckt wird, wird ein Wärmeaustausch zwischen Wärmeträgerschichten unterschiedlicher Temperatur über den Behältermantel unterbunden, ohne eine aufwendige Behälterkonstruktion in Kauf nehmen zu müssen. Es wird vielmehr ein einfacher Konstruktionsaufbau der Wärmeisolierung aus einzelnen, scharenweise versetzbaren Wärmedämmsteinen ermöglicht, weil die sich am äußeren Behältermantel abstützende Wärmeisolierung lediglich auf Druck beansprucht wird. Dies bedeutet, daß der lastabtragende Behältermantel unterschiedlich aufgebaut und beispielsweise durch eine Betonwanne gebildet werden kann, in die dann zumindest im Bereich des Behältermantels die Wärmeisolierung aus einzelnen Wärmedämmsteinen eingesetzt werden kann. Eine Bodenisolierung ist nur dann erforderlich, wenn über den Boden ein Wärmeabzug zu befürchten ist. Liegen die Temperaturen der untersten Wärmeträgerschichten im Bereich der Bodentemperatur bzw. darunter, so kann auf eine Bodenisolierung eines solchen Pufferspeichers vorteilhaft verzichtet werden, was im allgemeinen bei Speichervolumen über 10 m3 der Fall ist.

Der Aufbau der Wärmeisolierung zumindest im Bereich des Behältermantels aus einzelnen Wärmedämmsteinen bietet die vorteilhafte Voraussetzung dafür, den Pufferspeicher nicht vorfertigen zu müssen, sondern erst am Aufstellungsort zusammenbauen zu können. Dies gilt insbesondere für Pufferspeicher mit einem metallischen Behältermantel, weil in diesem Fall der lastabtragende Behältermantel aus einem um den zylindrischen Wärmeisoliermantel gebogenen Blechband gebildet werden kann, dessen axiale Ränder miteinander zugfest verbunden werden. Zur Errichtung des Pufferspeichers ist daher zunächst der zylindrische Wärmeisoliermantel aus den einzelnen Wärmedämmsteinen aufzubauen, bevor das entsprechend abgelängte Blechband um den Wärmeisoliermantel gebogen wird und dann die aneinanderstoßenden Ränder des Blechbandes miteinander zugfest verbunden werden, beispielsweise durch das Setzen von Nieten. Die Dichtheit des Pufferspeichers wird durch die innere Folienauskleidung sichergestellt, so daß lediglich für einen entsprechend isolierten Behälterdeckel zu sorgen ist, durch den vorzugsweise die Leitungsanschlüsse geführt sind.

Besonders einfache Konstruktionsverhältnisse ergeben sich, wenn die hintereinandergereihten Wärmedämmsteine zu ihrer gelenkigen Verbindung aus Schultern und Gegenschultern bestehende Scharnieransätze aufweisen, die auf ihren einander axial gegenüberliegenden Stirnseiten einerseits einen Gelenkzapfen und anderseits eine Zapfenaufnahme bilden. Durch diese Scharnieransätze werden zwischen den Wärmedämmsteinen gelenkige Verbindungen erreicht, die in einfacher Weise eine Anpassung des Wärmeisoliermantels an den jeweiligen Durchmesser des lastabtragenden Behältermantels erlauben, ohne die Wärmedämmsteine an unterschiedliche Behälterdurchmesser anpassen zu müssen. Die in die Zapfenaufnahmen eingreifenden Gelenkzapfen der Scharnieransätze ergeben darüber hinaus eine gegenseitige Verankerung der einzelnen neben- und übereinandergesetzten Wärmedämmsteine, wodurch der Aufbau des Wärmeisoliermantels aus den Wärmedämmsteinen ohne zusätzliche Verbinder erheblich erleichtert wird.

In der Zeichnung ist der Erfindungsgegenstand beispielsweise dargestellt. Es zeigen
- Fig. 1: einen erfindungsgemäßen Pufferspeicher für den Wärmeträger eines Wärmeverbrauchers in einem zum Teil aufgerissenen Schaubild,
- Fig. 2: den aus einzelnen Wärmedämmsteinen zusammengefügten Wärmeisoliermantel ausschnittsweise in einer zum Teil aufgerissenen Seitenansicht in einem größeren Maßstab und
- Fig. 3: den Wärmeisoliermantel nach der Fig. 2 in einer Draufsicht.

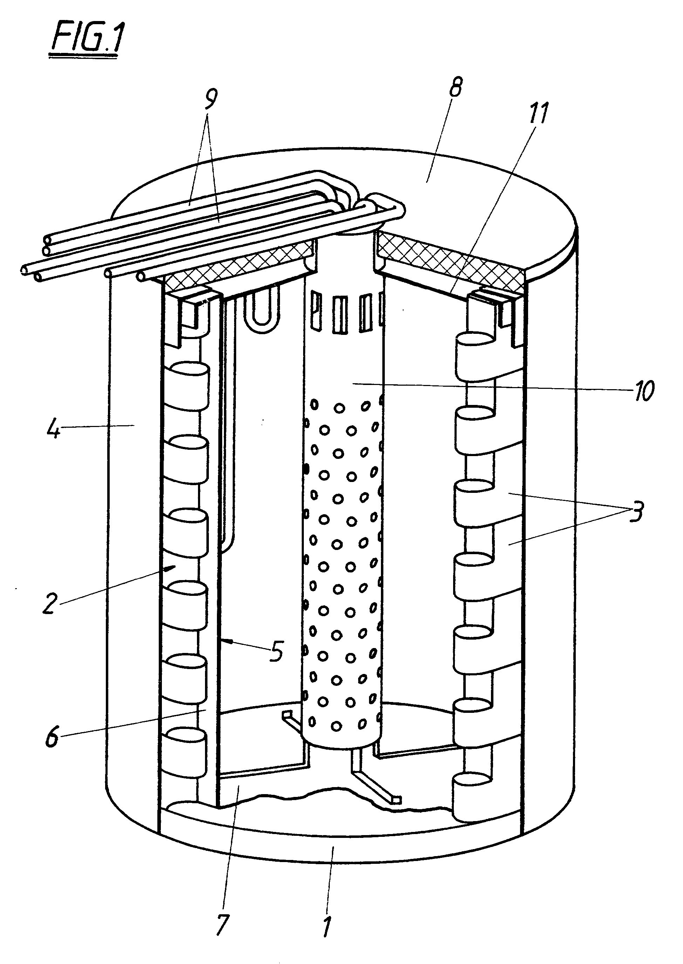

Gemäß dem Ausführungsbeispiel der Fig. 1 besteht der dargestellte Pufferspeicher für den Wärmeträger eines Wärmeverbrauchers, insbesondere einer Niedertemperaturheizung, aus einer wärmeisolierenden, kreisförmigen Bodenplatte 1, auf der ein in sich geschlossener Wärmeisoliermantel 2 aus einzelnen Wärmedämmsteinen 3 scharenweise aufgebaut ist. Dieser Wärmeisoliermantel 2 ist auf der Außenseite von einem um den Wärmeisoliermantel 2 gebogenen Behältermantel 4 aus Blech umschlossen, dessen aneinanderstoßende Ränder miteinander zugfest verbunden sind, so daß über den Behältermantel 4 die hydrostatischen Kräfte abgetragen werden können. Auf der Innenseite ist die Bodenplatte 1 und der Wärmeisoliermantel 2 durch eine Auskleidung 5 aus einer wasserdichten Folie abgedeckt, wobei die Mantelfolie 6 mit der Bodenfolie 7 wasserdicht verschweißt sind. Der in dieser Art gebildete Pufferspeicher wird oben durch einen wärmeisolierenden Deckel 8 verschlossen, durch den beispielsweise die Anschlußleitungen 9 für einen Ladekreis, für den Vor- und Rücklauf einer Niedertemperaturheizung und für eine Brauchwasseraufbereitung geführt sind.

Um eine möglichst ungestörte Schichtung des Wärmeträgers im Pufferspeicher zu erhalten, weist dieser einen Ladeeinsatz 10 in Form eines Rohres mit über der Höhe verteilten Durchtrittsöffnungen auf, so daß der beispielsweise aus dem Ladekreis in das Rohr eintretende Wärmeträger aus dem Rohr in jenem Höhenbereich austritt, in dem die Schichttemperatur dem zugeführten Wärmeträger des Ladekreises entspricht.

Da der Pufferspeicher drucklos betrieben wird, wird zur Vermeidung von Verdunstungsverlusten des Wärmeträgers der Wärmeträger mit einer auf dem Wärmeträgerspiegel schwimmenden Abdeckfolie 11 abgedeckt. Die auf dem Wärmeträgerspiegel schwimmende Abdeckfolie 11 läßt außerdem Änderungen des Füllstandes des Pufferspeichers zu.

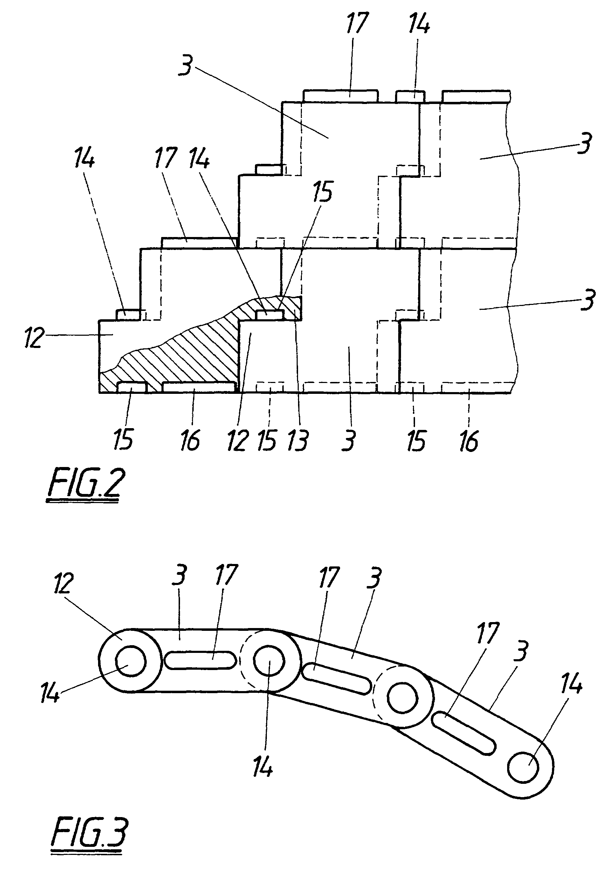

Wie insbesondere den Fig. 2 und 3 entnommen werden kann, greifen die hintereinandergereihten Wärmedämmsteine 3 mit Schultern 12 und Gegenschultern 13 ineinander ein, die Scharnieransätze bilden. Diese Scharnieransätze weisen auf ihren einander axial gegenüberliegenden Stirnseiten einerseits einen Gelenkzapfen 14 und anderseits eine Zapfenaufnahme 15 auf, so daß sich beim Aneinandersetzen der einzelnen Wärmedämmsteine 3 zwischen diesen eine gelenkige Verbindung ergibt. Diese gelenkige Verbindung erlaubt eine Anpassung des aus den Wärmedämmsteinen 3 errichteten Wärmeisoliermantels 2 an unterschiedliche Durchmesser des Behältermantels 4, wie dies der Fig. 3 unmittelbar entnommen werden kann. Um eine zusätzliche Verbindung zwischen den einzelnen Wärmedämmsteinen 3 übereinanderliegender Steinscharen zu erhalten, können auf der Unterseite der Wärmedämmsteine 3 Nuten 16 vorgesehen werden, die mit Federn 17 auf der Oberseite der Wärmedämmsteine 3 zusammenwirken.

## Patentansprüche

1. Pufferspeicher für den Wärmeträger eines Wärmeverbrauchers, insbesondere einer Niedertemperaturheizung, mit einem lastabtragenden Behälter und mit einer Wärmeisolierung zwischen dem Behältermantel (4) und einer wasserdichten Innenauskleidung, **dadurch gekennzeichnet, daß** die Wärmeisolierung zumindest im Bereich des Behältermantels (4) aus einzelnen, scharenweise versetzbaren Wärmedämmsteinen (3) besteht, die innen mit einer wasserdichten Folie (6) als Innenauskleidung abgedeckt sind.

2. Pufferspeicher nach Anspruch 1, **dadurch gekennzeichnet, daß** der lastabtragende Behältermantel (4) aus einem um den aus den Wärmedämmsteinen (3) aufgebauten, zylindrischen Wärmeisoliermantel (2) gebogenen Blechband besteht, dessen axiale Ränder miteinander zugfest verbunden sind.

3. Pufferspeicher nach Anspruch 1 oder 2, **dadurch gekennzeichnet, daß** die hintereinandergereihten Wärmedämmsteine (3) zu ihrer gelenkigen Verbindung aus Schultern (12) und Gegenschultern (13) bestehende Schamieransätze aufweisen, die auf ihren einander axial gegenüberliegenden Stirnseiten einerseits einen Gelenkzapfen (14) und anderseits eine Zapfenaufnahme (15) bilden.

## Claims

1. Buffer storage for the heat transfer fluid of a heat consumer, especially a low temperature heating installation, comprising a load-bearing tank and thermal insulation between the tank shell (4) and a watertight inner cladding, **characterised in that** the thermal insulation comprises, at least in the region of the tank shell (4), individual heat insulating blocks (3) arranged in groups which are covered on the inside with a watertight film (6) as an inner cladding.

2. Buffer storage according to claim 1, **characterised in that** the load-bearing tank shell (4) comprises a metal band bent around the cylindrical heat insulating shell (2) constructed from heat insulating blocks (3), the axial edges thereof being connected together in a tension-proof way.

3. Buffer storage according to claim 1 or 2, **characterised in that** the heat insulating blocks (3) arranged one after the other comprise hinge attachments consisting of shoulders (12) and reverse shoulders (13) for their hinged connection wherein the hinge attachments form on their end faces lying axially opposite each other on the one hand a link bolt (14) and on the other hand a bolt receiving member (15).

## Revendications

1. Accumulateur tampon pour le fluide de transfert de chaleur d'un utilisateur de chaleur, en particulier un chauffage à basse température, avec un récipient d'homogénéisation de la charge et avec une isolation thermique entre l'enveloppe de récipient (4) et un revêtement intérieur, étanche à l'eau, **caractérisé en ce que** l'isolation thermique est formée, au moins dans la zone de l'enveloppe de récipient (4), de briques d'isolation thermique (3) individuelles, pouvant être implantées en quinconce par groupes, couvertes intérieurement d'une feuille (6) étanche à l'eau, faisant office de revêtement intérieur.

2. Accumulateur tampon selon 1a revendication 1, **caractérisé en ce que** l'enveloppe de récipient (4) homogénéisant la charge est formée d'une bande de tôle, cintrée autour de l'enveloppe d'isolation thermique (2) cylindrique construite à partir des briques d'isolation thermique (3), bande en tôle dont les bords axiaux sont reliés ensemble de façon résistance à la traction.

3. Accumulateur tampon selon là revendication 1 ou 2, **caractérisé en ce que** les briques d'isolation thermique (3) alignées en rangées les unes derrière les autres présentent, pour assurer leur liaison articulée, des appendices formant charnières, formés d'épaulements (12) et d'épaulements conjugués (13), formant, sur leurs faces frontales axialement opposées les unes aux autres, d'une part, un tourillon d'articulation (14) et, d'autre part, un logement de tourillon (15).
